**Europäisches Patentamt**

(19) **European Patent Office**

**Office européen des brevets**

(11) Numéro de publication: **0 031 264**
**B1**

(12)                **FASCICULE DE BREVET EUROPEEN**

(45) Date de publication du fascicule du brevet:
**25.05.83**

(51) Int. Cl.³: **B 01 J 2/16,** B 05 B 13/00,
B 01 J 13/02, B 01 J 8/24,
A 61 J 3/06

(21) Numéro de dépôt: **80401695.4**

(22) Date de dépôt: **28.11.80**

(54) **Appareil perfectionné pour la granulation et/ou l'enrobage en lit jaillissant.**

(30) Priorité: **30.11.79 FR 7929462**

(43) Date de publication de la demande:
**01.07.81 Bulletin 81/26**

(45) Mention de la délivrance du brevet:
**25.05.83 Bulletin 83/21**

(84) Etats contractants désignés:
**AT BE CH DE GB IT LI LU NL SE**

(56) Documents cités:
**FR-A-2 418 669**

(73) Titulaire: **Société Chimique des Charbonnages, Tour Aurore Place des Reflets Cédex no 5, F-92080 Paris La Défense 2 (FR)**

(72) Inventeur: **Debayeux, Christian, 2, rue Carlo Sarrabezolles, F-31300 Toulouse (FR)**
Inventeur: **Lacroix, Hubert, 28, allée des Platanes, Villeneuve Tolosane F-31270 Cugnaux (FR)**
Inventeur: **Sternicha, Félix, 28, chemin Monlong, F-31300 Toulouse (FR)**

(74) Mandataire: **Fourquet, Antoinette et al, CdF Chimie Service Propriété Industrielle Tour Aurore Place des Reflets Cedex 5, F-92080 Paris La Defense 2 (FR)**

Appareil perfectionné pour la granulation et/ou l'enrobage en lit jaillissant

La présente invention concerne un appareil perfectionné pour la granulation et/ou l'enrobage en lit jaillissant.

Les lits jaillissants (souvent appelés également lits de type geyser) sont des lits de particules obtenus dans une enceinte d'axe vertical comportant à sa partie inférieure une partie tronconique à la pointe de laquelle on introduit un courant gazeux ascendant. Ce courant gazeux maintient les particules en suspension et provoque leur circulation selon des cycles fermés. En effet les particules sont entraînées par le courant gazeux ascendant au voisinage de l'axe de l'enceinte sous forme d'une sorte de jet ou geyser, se déplacent radialement vers les parois de l'enceinte puis redescendent lentement pour revenir vers la pointe de la partie tronconique. Là elles sont reprises par le courant gazeux ascendant. Le lit jaillissant est décrit dans le brevet français 1 125 461 du 11 mars 1955 déposé par National Research Council.

Il est connu d'utiliser le lit jaillissant pour granuler des produits fluides durcissables par évaporation d'eau ou de solvant ou par refroidissement et/ou pour enrober des particules ou des noyaux farbriqués au préalable à l'aide des produits fluides durcissables. Selon ce procédé de granulation on maintient sous forme du lit jaillissant les granules en cours de formation ou les particules à enrober à l'aide d'un courant gazeux ascendant froid ou chaud et on pulvérise dans le courant gazeux ascendant au-dessous du lit jaillissant le produit durcissable. Ce dernier est partiellement évaporé ou refroidi dans le courant gazeux puis se dépose sur les particules du lit jaillissant présentes à la partie inférieure de la partie tronconique. La couche de produit pulvérisé finit de se refroidir ou de s'évaporer jusqu'à son point de solidification pendant que les particules sont entraînées par le courant gazeux ascendant dans le jet central et qu'elles redescendent le long des parois de l'enceinte. Lorsque les particules arrivent à la pointe de la partie tronconique de l'enceinte, elles reçoivent une nouvelle couche de produit pulvérisé. La granulation ou l'enrobage se fait donc par dépot de couches successives de produit durcissable pulvérisé. Ce procédé de granulation est décrit dans les brevets français 1 275 463 et 1 354 768 déposés respectivement le 28 septembre 1960 et le 30 novembre 1961 par Potasse et Engrais Chimiques.

Les appareils utilisés jusqu'à présent pour la granulation en lit jaillissant sont constitués par une enceinte d'axe vertical, comportant une partie cylindrique à la partie inférieure de laquelle est fixée une partie tronconique.

Pour travailler en continu l'appareil est muni à la partie supérieure du lit dans la partie cylindrique d'une conduite latérale de soutirage. Le courant gazeux est introduit par la petite base de la partie tronconique de l'enceinte.

Le pulvérisateur pour la substance à granuler ou d'enrobage est placé au voisinage de la petite base de la partie tronconique de l'enceinte.

Avec les appareils utilisés jusqu'à présent il était difficile lorsqu'on opérait dans des appareils de diamètre important (par exemple supérieur à 1 m) de maintenir un lit homogène. En effet le débit gazeux nécessaire à un bon fonctionnement provoque l'entraînement de gros granules vers les cyclones de dépoussiérage. Il y avait donc un taux de recyclage élevé. D'autre part le lit risquait d'être bloqué par la formation de trop gros granules.

La présente invention concerne un appareil perfectionné qui permet d'opérer en continu dans des appareils de diamètre supérieur à 1 m en maintenant un lit homogène. Le taux de recyclage est par conséquent diminué.

La présente invention concerne par conséquent un appareil pour la granulation et/ou l'enrobage en lit jaillissant comportant:

— un entonnoir tronconique d'axe vertical surmonté d'une enceinte cylindrique coaxiale comportant une conduite de soutirage des granules,
— une conduite d'alimentation en gaz coaxiale reliée à la petite base de l'entonnoir,
— un pulvérisateur monté axialement dans ladite conduite au voisinage du plan de la petite base de l'entonnoir

caractérisé en ce que:

— l'enceinte cylindrique a un diamètre supérieur au plus grand diamètre de l'entonnoir et elle est fermée à sa partie inférieure par un plancher incliné relié au dispositif de soutirage,
— l'entonnoir est au moins partiellement disposé à l'intérieur de l'enceinte cylindrique, son bord supérieur étant toujours situé à l'intérieur de l'enceinte cylindrique,
— une plaque de recentrage tronconique est fixée à la paroi de l'enceinte cylindrique située au-dessus de l'entonnoir de façon à laisser un intervalle annulaire entre la plaque de recentrage et le bord supérieur de l'entonnoir.

La description donnée ci-dessous d'un appareil selon l'invention et de son fonctionnement permettra de mieux comprendre l'invention et ses avantages.

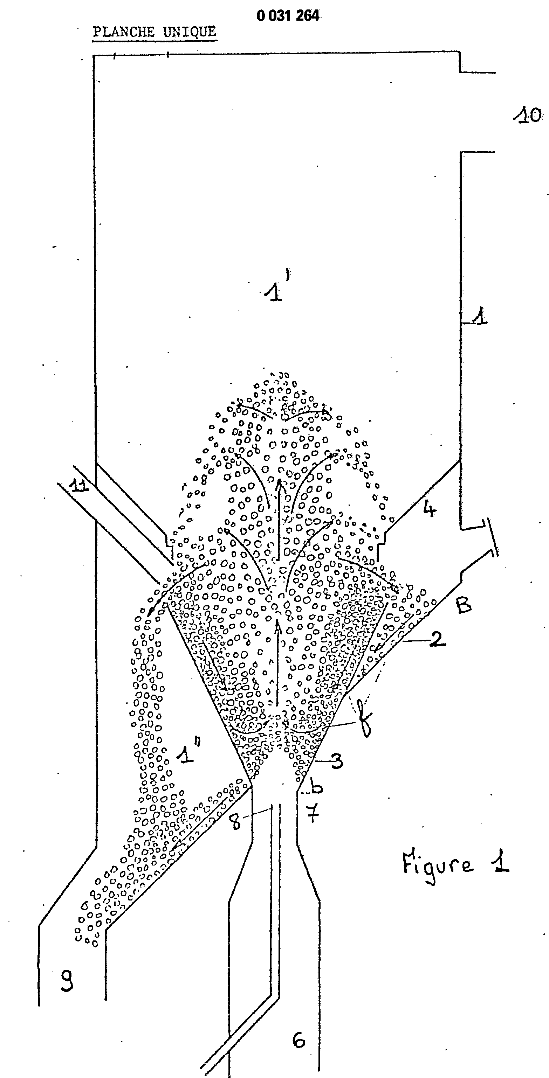

La fig. 1 annexée représente de façon schématique un appareil de granulation et/ou d'enrobage selon l'invention.

Cet appareil comporte une enceinte cylindrique (1) fermée à sa partie inférieure par un plancher incliné (2). Ce plancher est partiellement traversé par un entonnoir tronconique (3) dont la grande base B est située à l'intérieur de la partie cylindrique (1). La petite base b peut être située à l'intérieur de l'enceinte cylindrique, partiellement à l'intérieur et partiellement à l'extérieur ou comme représenté sur la figure annexée entièrement à l'extérieur.

On voit que l'entonnoir étant quasiment indépendant de l'enceinte cylindrique (1) est facile à changer. L'entretien de l'appareil est ainsi facilité.

D'autre part on peut facilement adapter l'appareil au traitement de différents produits en montant des entonnoirs d'angle différent. Au-dessus de l'entonnoir (3) se trouve une plaque de recentrage (4) ayant une forme tronconique, fixée à la paroi de l'enceinte cylindrique de façon à laisser un espace (5) entre son bord inférieur et le bord supérieur de l'entonnoir (3).

La plaque de recentrage (4) et l'entonnoir (3) divisent la partie cylindrique (1) en une moitié supérieure (1') et une moitié inférieure (1"). La petite base b de l'entonnoir (3) est reliée à une conduite d'alimentation en gaz (6), se terminant par un tronc de cône. Selon le mode de réalisation illustré sur la figure (1) la jonction entre la petite base b et la conduite (6) se fait de préférence par l'intermédiaire d'une partie cylindrique (7).

Cette partie cylindrique peut être supprimée, la jonction entre la conduite de gaz (6) et l'entonnoir (3) constituant alors un système convergent-divergent. Le pulvérisateur (8) est disposé au voisinage du plan de la petite base b. A la partie inférieure de la moitié (1") de l'enceinte cylindrique (1) se trouve une conduite (9) pour le soutirage des granules finis. A la partie supérieure de la moitié (1') se trouve une conduite d'évacuation (10) du gaz. Les granules sont recyclés par une conduite (11) située au-dessus et/ou au-dessous de la plaque de recentrage (4).

L'appareil fonctionne de la façon suivante: on introduit par la conduite (6) un courant gazeux ascendant qui maintient les granules sous forme de lit jaillissant.

La circulation des granules dans le lit jaillissant est schématisée sur la fig. 1 par les flèches f.

On voit que la majeure partie du lit jaillissant se trouve dans l'entonnoir (3) et que seul le jet central ou geyser pénètre dans la moitié (1') de l'enceinte cylindrique (1). Les particules de ce jet sont ramenées sur le lit par la plaque de recentrage (4). La partie supérieure (1') de l'enceinte cylindrique ayant un diamètre plus élevé que la grande base B de l'entonnoir (3) le courant gazeux ralentit fortement en pénétrant dans la moitié (1'). L'entraînement des fines par le courant gazeux est donc fortement diminué. Les granules débordent en continu par l'espace annulaire (5) au-dessus de la grande base B de l'entonnoir (3). Elles tombent alors dans la moitié (1") de l'enceinte cylindrique (1). Dans l'appareil représenté le plancher (2) est constitué par une plaque pleine et les particules roulent dessus pour se diriger vers la conduite de soutirage (9). Le plancher peut également être constitué par un tamis effectuant une préclassification. De façon connue les granules soutirés sont tamisés pour séparer le produit marchand des fines et des gros puis on recycle les fines et les gros après broyage. Ce recyclage se fait par la conduite (11).

Dans l'exemple comparatif donné ci-dessous les essais ont été effectués dans un appareil en verre de 70 cm de diamètre. Ces essais ont été faits avec du soufre, toutes conditions de débit, température, pression, position du pulvérisateur égales. Le tableau donné ci-dessous donne la granulométrie du produit obtenu dans le cas d'un granulateur à sortie radiale tel que décrit dans les brevets français 1 275 463 et 1 354 768 et avec une sortie par débordement concentrique conformément à la présente demande.

| Granulometrie G mm | 2 mm ≤ G ≤ 4,75 mm | G < 2 mm |
|---|---|---|
| Sortie radiale | 50% | 50% |
| Sortie par débordement concentrique | 80% | 20% |

## Revendication

Appareil pour la granulation et/ou l'enrobage en lit jaillissant comportant:

— un entonnoir tronconique (3) d'axe vertical surmonté d'une enceinte cylindrique (1) coaxiale comportant une conduite (9) de soutirage des granules,
— une conduite (6) d'alimentation en gaz coaxiale reliée à la petite base de l'entonnoir (3),
— un pulvérisateur (8) monté axialement dans ladite conduite (6) au voisinage du plan de la petite base de l'entonnoir (3)

caractérisé en ce que:

— l'enceinte cylindrique (1) a un diamètre supérieur au plus grand diamètre de l'entonnoir (3) et elle est fermée à sa partie inférieure par un plancher incliné (2) relié au dispositif de soutirage (9),

— l'entonnoir (3) est au moins partiellement disposé à l'intérieur de l'enceinte cylindrique (1), son bord supérieur étant toujours situé à l'intérieur de l'enceinte cylindrique (1),

— une plaque de recentrage tronconique (4) est fixée à la paroi de l'enceinte cylindrique (1) située au-dessus de l'entonnoir (3) de façon à laisser un intervalle annulaire (5) entre la plaque de recentrage (4) et le bord supérieur de l'entonnoir (3).


## Patentanspruch

Apparat zum Granulieren und/oder Überziehen in einer Wirbelfontäne, mit

— einem Trichter (3) mit vertikaler Achse, über dem eine koaxiale zylindrische Einfassung (1) mit einer Leitung (9) zum Ablassen von Körnern angeordnet ist,

— einer koaxialen, an die kleine Basis des Trichters (3) angeschlossenen Gaszufuhrleitung (6) und

— einem axial in der Leitung (6) in der Nähe der Ebene der kleinen Basis des Trichters (3) montierten Zerstäuber (8)

dadurch gekennzeichnet, daß

— die zylindrische Einfassung (1) einen Durchmesser besitzt, der größer ist als der größte Durchmesser des Trichters (3), und in ihrem unteren Teil durch einen mit der Ablaßeinrichtung (9) verbundenen geneigten Boden geschlossen ist,

— der Trichter (3) zumindest teilweise im Inneren der zylindrischen Einfassung (1) angeordnet ist, wobei sein oberer Rand immer im Inneren der zylindrischen Einfassung (1) liegt, und

— eine kegelstumpfförmige Zentrierungsplatte (4) an der Wand der zylindrischen Einfassung (1) oberhalb des Trichters (3) derart befestigt ist, daß ein ringförmiger Zwischenraum (5) zwischen der Zentrierungsplatte (4) und dem oberen Rand des Trichters (3) verbleibt.


## Claim

Apparatus for granulation and/or geyser bed coating comprising:

— a frusto-conical funnel (3) with a vertical axis surmounted by a coaxial cylindrical chamber (1) comprising a duct (9) for drawing off the granules;

— a coaxial gas supply duct (6) connected to the small base of the funnel (3);

— a pulverizer (8) mounted axially in the said duct (6) in the vicinity of the plane of the small base of the funnel (3),

characterized in that

— the cylindrical chamber (1) has a diameter greater than the largest diameter of the funnel (3) and is closed at its lower part by a sloping floor (2) connected to the drawing-off device (9);

— the funnel (3) is at least partially arranged inside the cylindrical chamber (1), its upper edge always being located inside the cylindrical chamber (1);

— a frusto-conical centering plate (4) is secured to the wall of the cylindrical chamber (1) located above the funnel (3) so as to leave an annular gap (5) between the centering plate (4) and the upper edge of the funnel (3).

PLANCHE UNIQUE

10

1'

1

11

4

B

2

f

1''

3

b

8

7

Figure 1

9

6

5